# EUROPÄISCHE PATENTSCHRIFT

(11) **EP 0 465 896 B1**
(45) Veröffentlichungstag und Bekanntmachung des Hinweises auf die Patenterteilung: **19.01.1994**
(21) Anmeldenummer: 91110244.0
(22) Anmeldetag: 21.06.1991
(51) Int. Cl.: F16L 37/08

(54) **Verbindungselement für Wellrohre und Schläuche**
Connector device for corrugated pipe and hose
Elément de raccordement pour tuyau ondulé et tuyau souple

(30) Priorität: 25.06.1990 DE 4020171
(43) Veröffentlichungstag der Anmeldung: 15.01.1992
(73) Patentinhaber: FLEXA GMBH & CO PRODUKTION UND VERTRIEB KG, D-63456 Hanau (DE)
(72) Erfinder: Gruber, Ernst, W-6450 Hanau 8 (DE); Bamberg, Alfred, W-6451 Grosskrotzenburg (DE)
(74) Vertreter: Schieferdecker, Lutz, Dipl.-Ing.

(56) Entgegenhaltungen:
- EP-A- 0 331 116
- US-A- 3 826 523
- US-A- 4 893 845

## Beschreibung

Die Erfindung betrifft ein Verbindungselement für Wellrohre und Schläuche mit parallel gewellter Schlauchwand mit den Merkmalen des Oberbegriffes des Anspruches 1.

Ein Verbindungselement der genannten Art ist z.B. aus dar EP o 331 116 A1 bekannt. Es umfasst als Schlauchverschraubung ein annähernd zylindrisches Gehäuse mit einem Anschlußstück mit Außengewinde und weist in der Gehäusewand mehrere, in einer Radialebene angeordnet, fensterartige Öffnungen auf. Zum Verbinden des Rohr-bzw. Schlauchendes innen in dem Gehäuse ist ein Tragring vorgesehen, der aus einem stirnseitig am Gehäuse anlegbaren Anschlagring und Schenkeln besteht,die in das Innere des Gehäuses greifen und mit Verriegelungskrallen an ihren freien Enden das Wellrohr bzw. den Schlauch im Bereich der fensterartigen Öffnungen fixieren.Zum Verbinden werden die Wellrohre oder Schläuche bis zur gewünschten Tiefe in das Gehäuse geschoben woraufhin die Verriegelungskrallen in eine der Rillen im Wellrohr bzw. Schlauch einrasten und ein Lösen durch Anlage an den Innenkanten der fensterartigen Öffnungen verhindern. Das Verankern der Wellrohre und Schläuche in den Verbindungselementen ist daher außerordentlich einfach und unkompliziert, ein Lösen ist jedoch nicht so einfach möglich.

Der Erfindung liegt daher die Aufgabe zugrunde, Verbindungselemente der genannten Art so zu gestalten, daß ein Lösen der Wellrohre bzw. Schläuche auf einfache und unkomplizierte Weise möglich ist.

Zur Lösung dieser Aufgabe sieht die Erfindung vor, daß der Tragring in Form einer Schiebemuffe aus einem Anschlagring, einem axial im Abstand dazu angeordneten Innenring, den Anschlagring und den Innenring verbindenden Stegen sowie sich vom Innenring zum An- schlagring hin erstreckenden Schenkeln mit den Verriege- lungskrallen an deren freien Enden besteht.

Die beim Zusammenfügen in die fensterartigen Öffnungen ausweichenden Verriegelungskrallen können auf Grund der zusätzlichen Verwendung eines Innenringes, der als Träger für die Schenkel mit den Verriegelungskrallen dient, beim Abziehen des Wellrohres bzw. Schlauches ebenfalls in die fensterartigen Öffnungen ausweichen. Voraussetzung hierzu ist allerdings, daß die Schiebemuffe in das Gehäuse axial einwärts verschoben ist. Während beim Stand der Technik das abzuziehende Wellrohr bzw. der Schlauch auf die Verriegelungskrallen eine radial einwärts gerichtete Kraft ausübt, so daß ein Lösen nicht so einfach möglich ist, werden die Verriegelungskrallen erfindungsgemäß beim Abziehvorgang radial auswärts beaufschlagt. Dies ist möglich, weil der Innenring an den zum Anschlagring hin gerichteten Schenkeln die Verriegelungskrallen trägt und deren Schwenkachsen bzw. Gelenkstellen bei einer gleichartigen Kraftrichtung ein Schwenken der Verriegelungskrallen in einer Richtung entgegengesetzt zu der nach dem Stand der Technik bewirkt. Auch werden die Verriegelungskrallen und entsprechend die sie tragenden Schenkel beim Abziehen des Wellrohres bzw. Schlauches entgegen der Situation beim Stand der Technik nicht auf Druck, sondern auf Zug belastet, wodurch ebenfalls ein Ausweichen der Verriegelungskrallen in den fensterartigen Öffnungen begünstigt wird.

Weitere Merkmale der Erfindung gehen aus Unteransprüchen im Zusammenhang mit der Zeichnung hervor.

Die Erfindung wird nachstehend anhand eines Ausführungsbeispieles, das in der Zeichnung dargestellt ist, näher beschrieben. Dabei zeigen:
- Fig. 1:: in größerem Maßstab und zum Teil geschnitten ein Verbindungselment mit einem vollständig eingeschobenen Ende eines Schlauches
- Fig. 2:: eine Ansicht wie in Fig. 1, jedoch in verriegeltem Zustand.
- Fig. 3:: eine Ansicht wie in den Figuren 1 und 2, jedoch ohne Schlauch.

Ein Verbindungselement 1 für Wellrohre und Schläuche 2 mit parallel gewellter Schlauchwand 3 besteht aus einem annähernd zylindrischen Gehäuse 4 und einer Schiebemuffe 5. Das Gehäuse 4 weist ein Anschlußstück 6 z.B. in Gestalt eines Gewindes sowie in der Gehäusewand 7 mehrere fensterartige Öffnungen 8 auf. Ferner ist innen im Gehäuse 4 ein eine Ringfläche 9 bildender Absatz vorgesehen, auf dem ein federelastischer Dichtungsring 1o angeordnet ist. Dieser Dichtungsring 1o besteht gemäß dem in den Figuren dargestellten Ausführungsbeispiel aus einem im Querschnitt L-förmigen Ringköprer, dessen Scheibenteil 11 auf der Ringfläche 9 aufliegt, während sich sein Zylinderteil 12 in axialer Richtung erstreckt. Die Abmessungen des Scheibenteiles 11 und des Zylinderteiles 12 sind dabei ferner so gewählt, daß der Schlauch 2 mit seinem freien Ende 13 auf dem Scheibenteil 11 aufliegen kann, während der Zylinderteil 12 das freie Schlauchende umgreift.

Die Schiebemuffe 5 umfasst einen Anschlagring 14, der stirnseitig außen an dem dem Anschlußstück 6 des Gehäuses 4 abgewandten Gehäuseende 15 angeordnet ist und an seinem Umfang verteilt sowie jeweils im Abstand voneinander mehrere Stege 16 trägt. Diese Stege 16 erstrecken sich von dem Anschlagring 14 axial einwärts in das Innere des zylindrischen Gehäuses 4 und liegen dort jeweils neben den fensterartigen Öffnungen 8. Im Inneren des Gehäuses 4 tragen die Stege 16 einen Innenring 17, der mit seiner freien Stirnfläche 18 an dem federelastischen Dichtungsring 1o anliegt. An dem Innenring 17 sind schließlich Schenkel 19 angeordnet und erstrekken sich zwischen den Stegen 16 zu dem Anschlagring 14 hin. Das freie Ende eines jeden Schenkels 19 ist als Verriegelungskralle 2o gestaltet, die sowohl eine Verriegelung mit dem Wellrohr bzw. dem gewellten Schlauch 2 als auch mit der fensterartigen Öffnung 8 des Gehäuses 4 herstellt.

Der unmittelbar an den Innenring 17 anschließende Teil des Schenkels 19 dient als Lagerstelle bzw. als Gelenk für die sowohl radial einwärts als auch radial auswärts verschwenkbare Verriegelungskralle 2o. Die Verriegelungskrallen 2o sind daher um eine dem Ende 13 des Wellrohres bzw. Schlauches 2 zugewandte Gelenkstelle schwenkbar. Geschaffen wird die Gelenkstelle durch eine Verringerung des Materialquerschnitts der Schenkel 19 unmittelbar am Innenring 17.

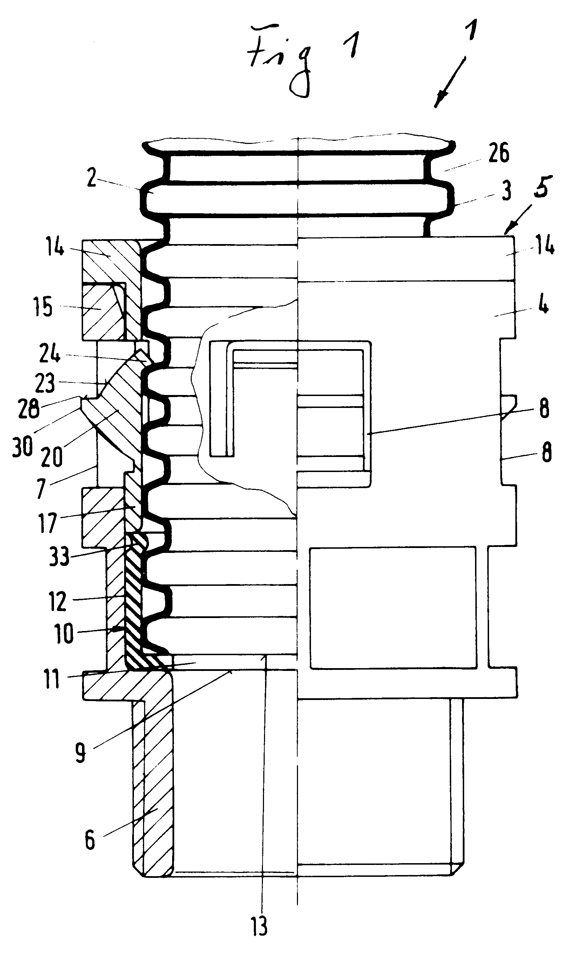

Zu ihrem freien Ende 21 hin weist jede Verriegelungskralle 2o eine radial einwärts gerichtete Innenschrägfläche 22 und eine radial auswärts gerichtete Außenschrägfläche 23 auf. Beim Einführen des Wellrohres oder Schlauches 2 trifft dessen freies Ende 13 auf die Innenschrägfläche 22 der Verriegelungskralle 2o und drückt diese nach außen in den Freiraum der fensterartigen Öffnung 8. Das Wellrohr bzw. der Schlauch 2 läßt sich daher gemäß Fig. 1 an der Kralle 2o vorbeischieben, bis das freie Ende 13 des Wellrohres bzw. Schlauches 2 auf den Dichtungsring 1o trifft.

Ferner wird ein Rastvorsprung 24 von der Innenschrägfläche 22 und einem Absatz 25 auf der Innenseite der Verriegelungskralle gebildet und greift in die jeweils vor ihm liegende Rille 26 des Wellrohres bzw. Schlauches 2 ( Fig. 1).

Die Außenschrägfläche 23 geht in eine ausschließlich radial auswärts gerichtete Anschlagfläche 28 über. Sie bildet zusammen mit einem in den Schenkel 19 übergehenden Verbindungsstück 29 einen nach außen gerichteten Rastvorsprung 3o.

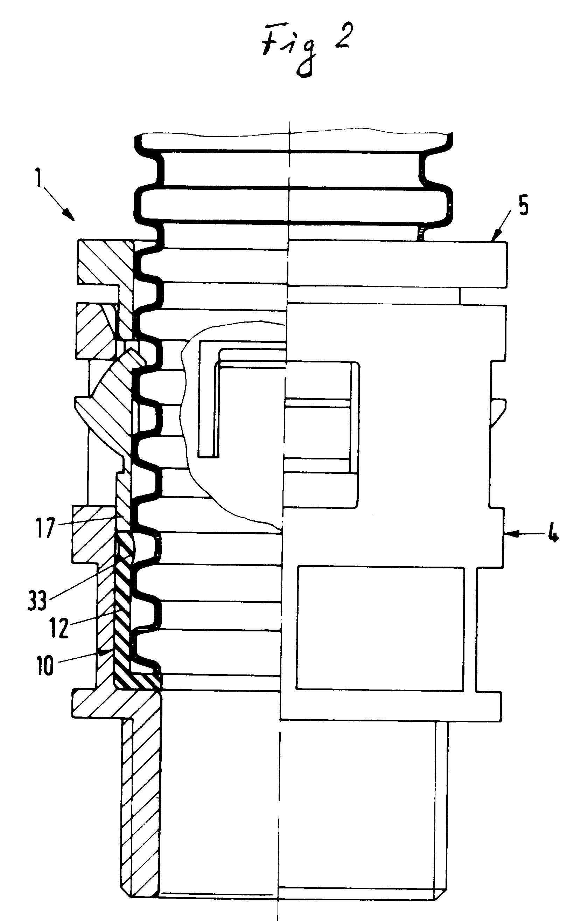

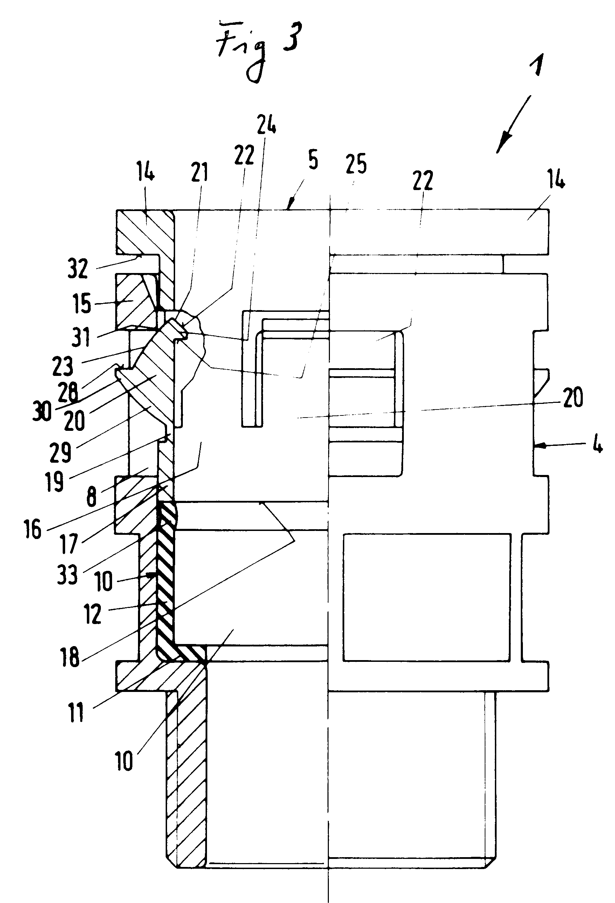

Der federelastische Dichtungsring 1o ist, wie insbesondere aus Fig.3 hervorgeht, derart dimensioniert, daß er die Schiebemuffe 5 mit den Außenschrägflächen 23 an den Verriegelungskrallen 2o gegen die Innenkanten 31 der fensterartigen Öffnungen 8 drückt. Dabei entfernt sich der Anschlagring 14 der Schiebemuffe 5 mit seiner gehäuseseitigen Stirnfläche 32 ein gewisses Stück von dem Ende 15 des Gehäuses 4 (Fig.3). Auch in dieser Position ist der Dichtungsring 1o noch komprimiert und hierdurch im Bereich seines freien Endes 33 geringfügig radial einwärts verformt (Fig.3). Wird nunmehr das freie Ende 13 eines Wellrohres oder Schlauches 2 durch den Anschlagring 14 der Schiebemuffe 5 in das Verbindungselement 1 einge- schoben, so stößt das freie Ende 13 auf die Innenschrägflächen 22 der Verriegelungskrallen 2o,schiebt bei weiterer axialer Bewegung die Schiebemuffe 5 gegen die Kraft des Dichtungsringes 1o axial vor sich her und drückt schließlich durch die Innenschrägflächen 22 die Verriegelungskrallen 2o in die fensterartigen Öffnungen 8, wodurch das Wellrohr bzw. der Schlauch 2 mit seinen Rillen 26 an den Rastvorsprüngen 24 vorbei bis zum scheibenförmigen Teil 11 des Dichtungsringes 1o geschoben werden kann. Sobald die vom Wellrohr oder Schlauch 2 auf die Verriegelungskrallen 2o ausgeübte Druckkraft nachlässt, und sich eine Rille 26 vor dem nach innen gerichteten Rastvorsprung 24 befindet, schwenkt die Verriegelungskralle aus ihrer Lage in der Öffnung 8 im Uhrzeigersinn gemäß Fig. 1 nach rechts und befindet sich damit in einer Verriegelungsposition. Das Wellrohr bzw. der Schlauch 2 kann sich jetzt selbsttätig nicht mehr aus dem Verbindungselement 1 lösen. Ferner drückt der Dichtungsring 1o die Schiebemuffe 5 nunmehr in die in Fig. 2 dargestellt Position, in der das freie Ende 21 der Verriegelungskralle die Innenkante 31 der fensterartigen Öffnung 8 hintergreift. Der Anschlagring 14 steht nun wiederum im Abstand von dem freien Ende 15 des Gehäuses 4.

Zum Lösen muß nunmehr die Schiebmuffe zunächst axial einwärts in das Gehäuse 4 zusammen mit dem Wellrohr bzw. Schlauch 2 gegen die Kraft des Dichtungsringes 1o verschoben werden, bis wiederum die freien Enden 21 an den Verriegelungskrallen 2o vor den fensterartigen Öffnungen 8 des Gehäuses stehen und die Verriegelungskrallen 2o radial auswärts schwenken können. Dies geschieht, sobald bei einwärts verschobener Schiebemuffe 5 am Wellrohr oder Schlauch 2 kräftig gezogen wird, so daß die außen am Wellrohr bzw. am Schlauch 2 notwendigerweise vorhandenen Schrägflächen die Verriegelungskrallen 2o nach außen drücken. Das Verbindungselement 1 und das Wellrohr bzw. der Schlauch 2 sind somit wieder lösbar.

## Patentansprüche

1. Verbindungselement für Wellrohre und Schläuche mit parrallel gewellter Schlauchwand, das ein annähernd zylindrisches Gehäuse mit einem Anschlußstück sowie in der Gehäusewand mehrere,fensterartige Öffnungen sowie einen am Gehäuse anlegbaren Tragring mit einer stirnseitigen Ringfläche und mit Schenkeln und Verriegelungskrallen an deren freien Enden umfasst, dadurch gekennzeichnet, daß, der Tragring in Form einer Schiebemuffe (5)aus einem Anschlagring (14), einem axial im Abstand dazu angeordneten Innenring (17 ), den Anschlagring (14) und den Innenring ( 17) verbindenden Stegen (16 ) sowie sich vom Innenring (17 ) zum Anschlagring (14 )hin erstreckenden Schenkeln (19 ) mit den Verriegelungskrallen (2o) an deren freien Enden besteht.

2. Verbindungselement nach Anspruch 1, dadurch gekennzeichnet, daß die Verriegelungskralle (2o ) zu ihrem freien Ende (21 ) hin eine radial einwärts gerichtete Innenschrägfläche (22 ) und eine radial auswärts gerichtete Außenschrägfläche (23 ) aufweist.

3. Verbindungselement nach Anspruch 1 und 2, dadurch gekennzeichnet, daß eine ausschließlich radial auswärts gerichtete Anschlagfläche (28 ) an die radial auswärts gerichtete Außenschrägfläche (23 ) anschließt.

4. Verbindungselement nach einem der vorhergehenden Ansprüche dadurch gekennzeichnet, daß jede Verriegelungskralle (2o ) mindestens einen radial einwärts gerichteten Rastvorsprung (24) aufweist.

5. Verbindungselement nach einem der vorhergehenden Ansprüche dadurch gekennzeichnet, daß das Gehäuse ( 4 ) innen einen eine Ringfläche (9 ) bildenden Absatz aufweist, daß ein federelastischer Dichtungsring (1o) im Gehäuse ( 4 ) auf dem Absatz angeordnet ist und daß die Schiebemuffe ( 5 ) mit ihrem Innenring (17 ) stirnseitig an dem Dichtungsring (1o ) anliegt und von diesem - bezogen auf das Gehäuse ( 4 ) - axial auswärts beaufschlagt wird.

6. Verbindungselement nach einem der vorhergehenden Ansprüche dadurch gekennzeichnet, daß die Verriegelungskrallen (2o ) mit ihren Schenkeln (19) schwenkbar am Innenring (17 ) gelagert sind und daß die Gelenkstellen bezogen auf die radial einwärts gerichteten Rastvorsprünge (24 ) derart angeordnet sind, daß die Verriegelungskrallen (2o) bei einer auf das Wellrohr bzw. auf den Schlauch ( 2 ) ausgeübten Zugkraft radial auswärts schwenkbar sind.

7. Verbindungselement nach einem der vorhergehenden Ansprüche dadurch gekennzeichnet, daß die Verriegelungskrallen (2o) um eine dem Ende ( 13 ) des Wellrohres bzw. Schlauches ( 2 ) zugewandte Gelenkstelle schwenkbar sind.

## Claims

1. Connecting element for corrugated pipes and hoses with a parallel ribbed hose wall, which is surrounded by an approximately cylindrical housing with a connecting piece, as well as a plurality of window-like apertures in the wall of the housing, as well as a support ring which can be applied to the housing, with an annular surface at its front end and with limbs with locking hooks at the free ends thereof, characterised in that the support ring, in the form of a sliding sleeve (5) is composed of a stop ring (14), an internal ring (17) arranged axially at a distance therefrom, tabs (16) which connect the stop ring (14) to the internal ring (17), as well as limbs (19) which extend from the internal ring (17) to the stop ring (14), which have locking hooks (20) at their free ends.

2. Connecting element according to claim 1, characterised in that the free end (21) of the locking hook (20) is provided with a radially inward facing internal inclined surface (22) and a radially outward facing exterior inclined surface (23).

3. Connecting element according to claims 1 and 2, characterised in that an exclusively radially outward facing stop surface (28) is connected to the radially outward facing exterior inclined surface (23).

4. Connecting element according to one of the preceding claims, characterised in that each locking hook (20) is provided with at least one radially inward facing locating projection (24).

5. Connecting element according to one of the preceding claims, characterised in that the housing (4) is provided internally with a collar which forms an annular surface (9), that a resilient sealing ring (10) is arranged in the housing (4) on the collar, and that the sliding sleeve (5) and its internal ring (17) are applied to the front wall of the sealing ring (10) and are forced axially outwards thereby with respect to the housing (4).

6. Connecting element according to one of the preceding claims, characterised in that the locking hooks (20) and their limbs (19) are swivellably mounted on the internal ring (17) and that the joint positions are so arranged, with respect to the radially inward facing locating projections (24), that the locking hooks (20) are swivelable radially outwards when pulling force is exerted on the corrugated pipe or on the hose (2).

7. Connecting element according to one of the preceding claims, characterised in that the locking hooks (20) are swivelable about a joint position which is adjacent to the end (13) of the corrugated pipe or hose (2).

## Revendications

1. Elément de raccordement pour tuyaux ondulés et tuyaux flexibles dont la paroi est ondulée parallèlement, et qui comprend un boltier approximativement cylindrique présentant une pièce de raccordement, ainsi que plusieurs ouvertures en fenêtre dans la paroi du boîtier, et une bague de support pouvant etre appliquée contre le boîtier, bague qui présente une surface annulaire frontale et des branches avec des griffes de verrouillage à leurs extrémités libres, caractérisé en ce que la bague de support, sous forme d'un manchon coulissant (5) se compose d'une bague de butée (14), d'une bague interne (17) disposée axialement à distance, d'ailettes (16) reliant la bague de butée (14) et la bague interne (17), ainsi que des branches (19) s'étendant depuis la bague interne (17) vers la bague de butée (14), branches qui présentent des griffes de verrouillage (20) à leurs extrémités libres.

2. Elément de raccordement selon la revendication 1, caractérisé en ce que la griffe de verrouillage (20) présente, en direction de son extrémité libre (21), une surface inclinée interne (22) orientée radialement vers l'intérieur et une surface inclinée externe (23) orientée radialement vers l'extérieur.

3. Elément de raccordement selon la revendication 1 et 2, caractérisé en ce qu'une surface de butée (28) orientée exclusivement radialement vers l'extérieur se continue par la surface inclinée externe (23) orientée radialement vers l'extérieur.

4. Elément de raccordement selon l'une des revendications précédentes, caractérisé en ce que chaque griffe de verrouillage (20) présente au moins une saillie d'arret (24) orientée radialement vers l'intérieur.

5. Elément de raccordement selon l'une des revendications précédentes, caractérisé en ce que le boitier (4) présente, à l'intérieur, un talon formant une surface annulaire (9), en ce qu'une bague d'étanchéité (10) élastique est disposée dans le boitier (4) sur le talon et que le manchon coulissant (5) est appliqué par la face frontale de sa bague interne (17) contre la bague d'étanchéité (10) qui imprime sa force à ce dernier axialement vers l'extérieur - relativement au boîtier (4) -.

6. Elément de raccordement selon l'une des revendications précédentes, caractérisé en ce que les griffes de verrouillage (20) et leurs branches (19) sont logées de manière pivotante contre la bague interne (17) et que relativement aux saillies d'arrêt (24) dirigées radialement vers l'intérieur, les points d'articulation sont disposés de sorte que les griffes de verrouillage (20) sont pivotantes radialement vers l'extérieur quand une force de traction est exercée sur le tuyau ondulé resp. le flexible 2.

7. Elément de raccordement selon l'une des revendications précédentes, caractérisé en ce que les griffes de verrouillage (20) sont pivotantes autour d'un point d'articulation tourné vers l'extrémité (13) du tuyau ondulé resp. du flexible (2).
